# EUROPEAN PATENT APPLICATION

(11) **EP 4 596 145 A1**
(43) Date of publication of application: **06.08.2025**
(21) Application number: 25152793.3
(22) Date of filing: 20.01.2025
(51) Int. Cl.: B22F 10/28, B22F 12/41, B22F 12/44, B33Y 10/00, B33Y 30/00, B23K 26/073, B33Y 70/10, C22C 1/04, C22C 1/05

(54) **ADDITIVE MANUFACTURING PROCESSES UTILIZING A RING LASER FOR FINE FEATURES**

(30) Priority: 24.01.2024 US 202418421253
(71) Applicant: Hamilton Sundstrand Corporation, Charlotte, NC 28217-4578 (US)
(72) Inventor: SKIBA, Tommy, East Hartford, 06118 (US)
(74) Representative: Dehns

(57) **Abstract**

A method for making an article includes inputting a digital model of the article into an additive manufacturing apparatus or system comprising an energy source (112), wherein the energy source (112) is a ring laser having a beam size and repeatedly applying energy from the ring laser to successively applied incremental quantities of a powder particles to fuse the powder particles to form the article corresponding to the digital model. Applying the energy includes passing the energy from the ring laser through an optical system (116, 118) to narrowing a width of the beam size to create a smaller beam size before the energy reaches the powder particles.

## Description

### BACKGROUND

This invention relates forming elements or parts and, more particularly, to a systems and method of forming fine features in an additively manufactured workpiece with a ring laser.

Additive manufacturing refers to a category of manufacturing methods characterized by the fact that the finished part is created by layer-wise construction of a plurality of thin sheets of material. Additive manufacturing may involve applying liquid or powder material to a workstage, then doing some combination of sintering, curing, melting, and/or cutting to create a layer. The process is repeated up to several thousand times to construct the desired finished component or article.

Various types of additive manufacturing are known. Examples include stereo lithography (additively manufacturing objects from layers of a cured photosensitive liquid), electron beam melting (using a powder as feedstock and selectively melting the powder using an electron beam), laser additive manufacturing (using a powder as a feedstock and selectively melting the powder using a laser), and laser object manufacturing (applying thin solid sheets of material over a workstage and using a laser to cut away unwanted portions).

Laser additive manufacturing can be referred to generally as a powder bed fusion (PBF) methods and as noted above, uses a laser to melt powder together. While such systems are generally effective, as the details get smaller improvements may be needed.

### BRIEF DESCRIPTION

A method for making an article is disclosed. The method includes: inputting a digital model of the article into an additive manufacturing apparatus or system comprising an energy source, wherein the energy source is a ring laser having a beam size; and repeatedly applying energy from the ring laser to successively applied incremental quantities of a powder particles to fuse the powder particles to form the article corresponding to the digital model. Applying the energy includes passing the energy from the ring laser through an optical system to narrowing a width of the beam size to create a smaller beam size before the energy reaches the powder particles.

In addition to one or more of the features described above, or as an alternative to any of the foregoing embodiments, the energy source melts or fluidizes at least a portion of the powder particles.

In addition to one or more of the features described above, or as an alternative to any of the foregoing embodiments, the powder particles can include a metal.

In addition to one or more of the features described above, or as an alternative to any of the foregoing embodiments, the metal can include aluminum, titanium, copper or nickel alloy.

In addition to one or more of the features described above, or as an alternative to any of the foregoing embodiments, the powder particles can include a ceramic.

In addition to one or more of the features described above, or as an alternative to any of the foregoing embodiments, the ceramic includes silicon carbide, silicon nitride, hafnium, aluminum nitride, or aluminum oxide.

In addition to one or more of the features described above, or as an alternative to any of the foregoing embodiments, the optical system can be configured to reduce a spot size below a minimum spot size of the ring laser.

In addition to one or more of the features described above, or as an alternative to any of the foregoing embodiments, the optical system can include a reverse zoom optic.

In addition to one or more of the features described above, or as an alternative to any of the foregoing embodiments, the optical system can include an offset scanner.

Also disclosed is a system for making an article. The system can include an energy source in the form of a ring laser having a first beam size and an optical system configured to receive energy from the ring laser and create a laser beam with a second beam size that is smaller than the first beam size. The system can also include a controller to cause the laser beam with the second beam size to be successively applied to incremental quantities of a powder particles to fuse the powder particles to form the article corresponding to the digital model.

In addition to one or more of the features described above, or as an alternative to any of the foregoing embodiments, the energy source can melt or fluidizes at least a portion of the powder particles.

In addition to one or more of the features described above, or as an alternative to any of the foregoing embodiments, the powder particles can include a metal.

In addition to one or more of the features described above, or as an alternative to any of the foregoing embodiments, the powder particles can include a metal.

In addition to one or more of the features described above, or as an alternative to any of the foregoing embodiments, the metal can include aluminum, titanium, copper or nickel alloy.

In addition to one or more of the features described above, or as an alternative to any of the foregoing embodiments, the powder particles can include a ceramic.

In addition to one or more of the features described above, or as an alternative to any of the foregoing embodiments, the ceramic includes silicon carbide, silicon nitride, hafnium, aluminum nitride, or aluminum oxide.

In addition to one or more of the features described above, or as an alternative to any of the foregoing embodiments, the optical system can be configured to reduce a spot size below a minimum spot size of the ring laser.

In addition to one or more of the features described above, or as an alternative to any of the foregoing embodiments, the optical system can includes a reverse zoom optic.

In addition to one or more of the features described above, or as an alternative to any of the foregoing embodiments, the optical system can include an offset scanner.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIGs. 1A and 1B shows two different melt patterns with FIG. 1A showing a melt pattern according to the prior art and FIG. 1B showing a melt patterns according to one embodiment;
FIG. 2 shows an example power distribution of a ring laser used herein; and
FIG. 3 shows an example laser additive manufacturing system according to one embodiment.

### DETAILED DESCRIPTION

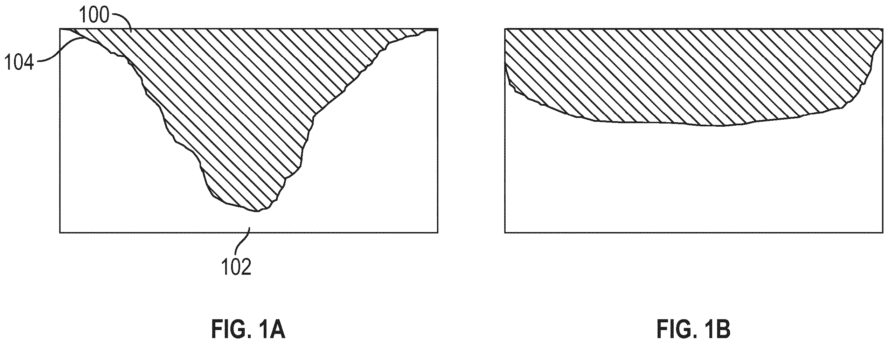

As noted above, one type of powder based additively manufacturing includes using a laser. Such systems can be referred to a laser powder bed fusion (L-PBF) systems herein. Such systems are commonly used to form metal parts from metal powder feed stock. The laser provides energy to the fed powder to create a melt pool. Such lasers have a minimum spot size. The systems also include optics or scanners that allow for expansion of the beam to melt more material. These optics expand the beam in a typical Gaussian pattern with more energy being presented to the center of the expanded beam at the edges. This distribution can lead to melt pool that is much "deeper" at its center than at its edges. An example of such a melt pool 100 is shown in FIG. 1A where the center 102 is much deeper than the edge 104. Further, it has been discovered that if the laser was focused more (e.g., the beam is made smaller) the problem would be worse.

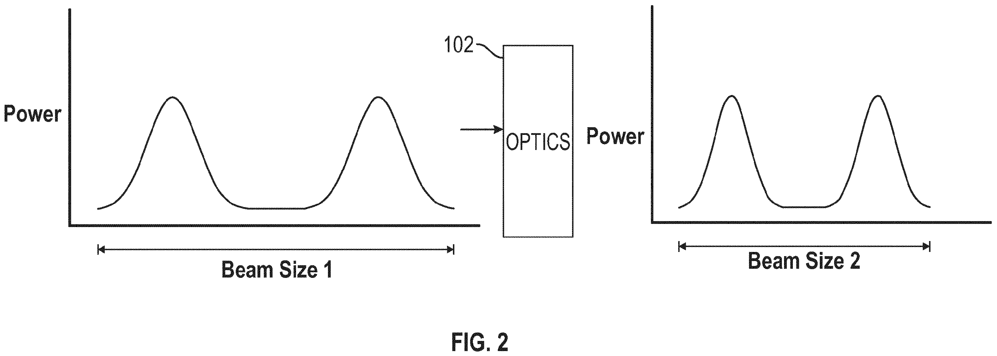

Herein disclosed are systems/methods that create a more uniform melt pool such as that shown in FIG. 1B. The systems/methods utilize a ring laser that provide a power distribution such as that shown in FIG. 2 (e.g,, more power it at edges than in the middle) so as to achieve the melt pattern of FIG. 1B. The ring laser has a first, unchanged, beam size indicated at as Beam Size 1 in FIG. 2. The energy emitted by the ring laser can be focused to a narrower beam size (Beam Size 2) by optics 102 as indicated in FIG. 2. This is in contrast to the prior art where narrowing the focus of the laser (e.g., reducing the beam size) would lead to the unwanted effect of causing too much vaporization of the material.

As shown in FIG. 2, an example of an additive manufacturing system or apparatus 110 includes energy source 112 that generates a laser output (laser beam) 114, a first optical system 116 that is used to guide the laser beam, a second optical system 118that is also to guide the laser beam, a frame 120, a powder supply 122, a powder processing bed 124, sintered powder material 126, a spreader 128, a powder supply support 130, and a stack support 132. The powder provided by the powder supply comes in the form of particle powders that are fused by being exposed to the laser beam.

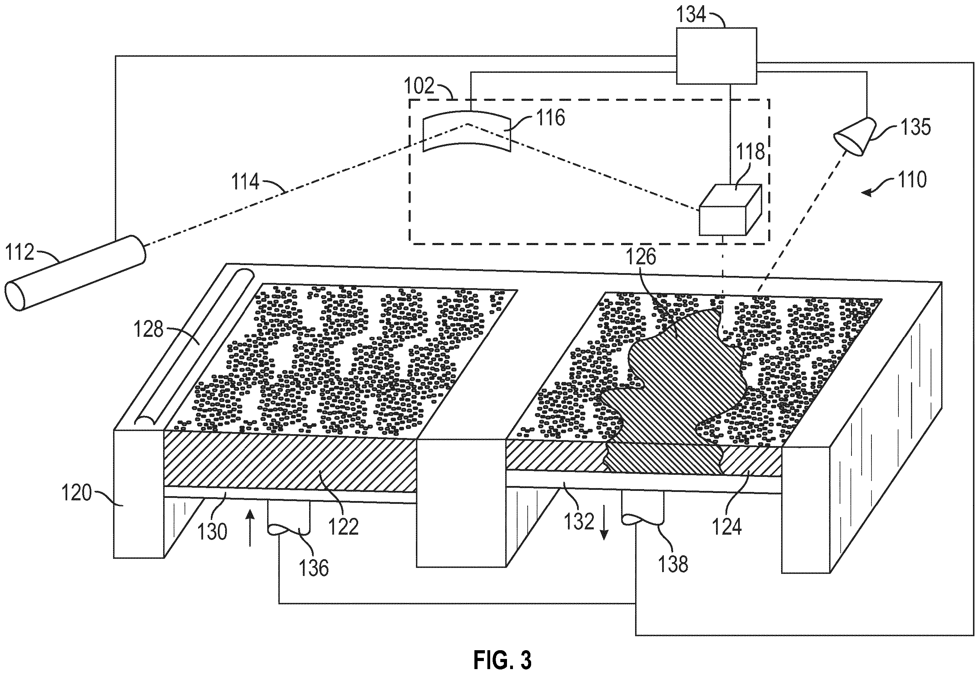

While shown as including two optical systems in FIG. 3, the system could include only one of them. Further, one or both of the optical systems of FIG. 3 can be the optics 102 of FIG. 2. At least of the included optical systems will serve to narrow the laser beam. This is in contrast to prior art systems where the optics expanded the laser beam to expand it so that the powder is not vaporized.

A controller 134 is operatively connected to the energy source 112, optical systems 116, 118, spreader 128, optional sensor 135, and actuators 136 and 138 for powder supply support 130 and stack support 132, respectively. Of course, the illustration in FIG. 3 is schematic in nature, and many alternative designs of additive manufacturing devices are possible. Various types of additive manufacturing materials, energy sources, powder feed and storage, atmosphere control, and processes can be used to fabricate articles and the individual features thereof that are described herein.

The energy source 112 is a ring laser according to embodiments herein. As opposed to typical Gaussian lasers, by having the energy source 112 be a ring laser it generates an energy beam 114 that has a power distribution such as that shown in FIG. 2. The optical system guide 116 can be a mirror in some embodiments to deflect radiation in a desired direction. The second optical system 118, such as an optical head, is present in some embodiments, and also directs energy in a desired direction. For example, the optical system 118 can include optical elements that focus the laser beam created by the ring laser to a smaller size (as opposed the prior art that expanded the laser beam of a single mode laser).

In one embodiment, the ring laser produces energy in the outer portion of the beam that is greater than in the center of the beam. For example, the ring may be set to 80% of the total energy with the center at 20%. The reverse is also possible as is any other split desirable.

The frame 120 is used to contain powder material in the powder supply 122 and in powder processing bed 124. The powder supply 122 and the powder processing bed 124 include powder material, such as powdered metals. The powder processing bed 124 further includes fused powder 126. Fused powder 126 is powder contained within powder processing bed 124 that has been at least partially sintered or melted.

Spreader 128 is a spreading device such as an air knife using an inert gas instead of air, which can transfer powder material from powder supply 122 to powder processing bed 124. The depiction of spreader 128 in FIG. 2 is of course only schematic in nature, and does not depict specific features such as controllably directed air jet nozzles that could be used to remove metal powder from targeted portions of the assembly such as fluid flow passages in the heat exchanger core, without removing metal powder from the first region between the heat exchanger core and the housing. Powder supply support 130 and stack support 132 are used to raise and/or lower material thereon during additive manufacturing.

During operation, energy source 112 generates laser beam 114, which is directed by the optical systems 116 and 118 to the powder processing bed 124. At least one of the optical systems 116 and 118 can narrow the size of the laser beam 114.

The energy intensity and scanning rate and pattern of the laser beam 114 can be controlled to produce a desired result in the powder processing bed. Optional sensor 135 can measure parameters at the build location for use in closed loop control by the controller 134. In some aspects, the result can be partial melting of powder particles resulting in a fused structure after solidification such as a sintered powder metal structure having some degree of porosity derived from the gap spaces between fused powder particles. The powder particles can be aluminum in one embodiment. Alternatively, the powder could be ceramic such a silicon carbide, silicon nitride, aluminum nitride, or aluminum oxide.

In some aspects, the result from exposure to the laser beam 114 can complete localized melting and fluidization of the powder particles producing a metal article having a density approaching or equal to that of a cast metal or plastic article. Due to using the ring laser and focusing/narrow elements as one or both of the optical systems 116 and 118, the energy distribution can be improved to create a melt pool more similar to FIG. 1B than in the prior art (e.g,, more similar to FIG. 1B than FIG. 1A) by having a laser beam with the intensities as shown in FIG. 2.

As will be understood, the optical systems 116 and 118 can be used to reduce the spot size below the minimum of the ring laser aperature diameter. To that end, the optical systems 116 and 118 can be or include a reverse zoom optic or offset scanner.

After each layer of the additively manufactured article is completed, powder supply support 130 is moved by actuator 136 to raise the height of powder material supply 122 with respect to frame. Similarly, stack support 132 is moved by actuator 138 to lower the height of article with respect to frame 120. Spreader 28 transfers a layer of powder from powder supply 122 to powder processing bed 124. By repeating the process several times, an object may be constructed layer by layer. Components manufactured in this manner may be made as a single, solid component.

The digital models used in the practice of the disclosure are well-known in the art, and do not require further detailed description here. The digital model can be generated from various types of computer aided design (CAD) software, and various formats are known, including but not limited to SLT (standard tessellation language) files, AMF (additive manufacturing format) files, PLY files, wavefront (.obj) files, and others that can be open source or proprietary file formats.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method for making an article, comprising:
inputting a digital model of the article into an additive manufacturing apparatus or system comprising an energy source (112), wherein the energy source (112) is a ring laser having a beam size; and
repeatedly applying energy from the ring laser to successively applied incremental quantities of a powder particles to fuse the powder particles to form the article corresponding to the digital model,
wherein applying the energy includes passing the energy from the ring laser through an optical system (116, 118) to narrowing a width of the beam size to create a smaller beam size before the energy reaches the powder particles.

2. The method of claim 1, wherein the energy source (112) melts or fluidizes at least a portion of the powder particles.

3. The method of claim 1 or 2, wherein the powder particles include a metal.

4. The method of claim 3, wherein the metal comprises aluminum, titanium, copper or nickel alloy.

5. The method of claim 1 or 2 wherein the powder particles include a ceramic, and optionally wherein powder particles include silicon carbide, silicon nitride, hafnium, aluminum nitride, or aluminum oxide.

6. The method of any preceding claim, wherein the optical system (116, 118) is configured to reduce a spot size below a minimum spot size of the ring laser.

7. The method of any preceding claim, wherein the optical system (116, 118) includes a reverse zoom optic.

8. The method of any preceding claim, wherein the optical system (116, 118) includes an offset scanner.

9. A system for making an article, the system comprising:
an energy source (112), wherein the energy source (112) is a ring laser having a first beam size;
an optical system (116, 118) configured to receive energy from the ring laser and create a laser beam with a second beam size that is smaller than the first beam size; and
a controller (134) to cause the laser beam with the second beam size to be successively applied to incremental quantities of a powder particles to fuse the powder particles to form the article corresponding to the digital model.

10. The system of claim 9, wherein the energy source (112) melts or fluidizes at least a portion of the powder particles.

11. The system of claim 10, wherein the powder particles include a metal, and optionally wherein the metal comprises aluminum, titanium, copper or nickel alloy.

12. The system of claim 10, wherein the powder particles include a ceramic, and optionally wherein powder particles include silicon carbide, silicon nitride, hafnium, aluminum nitride, or aluminum oxide.

13. The system of any of claims 9-12, wherein the optical system (116, 118) is configured to reduce a spot size below a minimum spot size of the ring laser.

14. The system of any of claims 9-13, wherein the optical system (116, 118) includes a reverse zoom optic.

15. The system of any of claims 9-14, wherein the optical system (116, 118) includes an offset scanner.
